## Europäisches Patentamt
## European Patent Office
## Office européen des brevets

(11) Numéro de publication: **0 286 503**
**A1**

(12)
# DEMANDE DE BREVET EUROPEEN

(21) Numéro de dépôt: **88400720.4**

(22) Date de dépôt: **24.03.88**

(51) Int. Cl.⁴: **C 04 B 35/00**
**C 04 B 35/50, H 01 G 1/01,**
**H 01 G 4/30**

(30) Priorité: **27.03.87 FR 8704287**

(43) Date de publication de la demande:
**12.10.88 Bulletin 88/41**

(84) Etats contractants désignés: **DE FR GB IT NL**

(71) Demandeur: **CENTRE NATIONAL DE LA RECHERCHE SCIENTIFIQUE (CNRS)**
**15, Quai Anatole France**
**F-75700 Paris Cedex 07 (FR)**

(72) Inventeur: **Marchand, Roger**
**38, rue de la Coulée**
**F-35510 Cesson-Sevigne (FR)**

**Antoine, Philippe**
**56 bis, rue de Chateau-Gontier**
**F-53200 Aze (FR)**

**L'Haridon, Paul**
**21 Chemin des Nouennes**
**F-35770 Vern sur Seiche (FR)**

**Laurent, Yves**
**Les Landes de Billi Thorigné-Fouillard**
**F-35510 Cesson-Sevigne (FR)**

(74) Mandataire: **Ahner, Francis et al**
**CABINET REGIMBEAU 26, avenue Kléber**
**F-75116 Paris (FR)**

(54) **Perovskites oxyazotées conductrices, leur préparation et leur utilisation notamment comme matériau d'électrode.**

(57) La présente invention concerne de nouvelles perovskites oxyazotées conductrices, leur préparation et leur utilisation notamment comme matériau d'électrode.

Les perovskites oxyazotées conductrices selon l'invention répondent à la formule générale I

$A B (O,N)_3$ (I)

dans le réseau cationique de laquelle :

* **A** désigne un métal choisi parmi les métaux des groupes IA et IIA, l'yttrium et les lanthanides,

* **B** désigne un métal choisi parmi les métaux de transition des groupes IVA à IB,

* à la condition expresse que l'un au moins des métaux **A** et **B** soit présent à un degré d'oxydation différent de son degré d'oxydation maximum normal.

**Description**

## PEROVSKITES OXYAZOTEES CONDUCTRICES, LEUR PREPARATION ET LEUR UTILISATION NOTAMMENT COMME MATERIAU D'ELECTRODE.

La présente invention concerne de nouvelles perovskites oxyazotées dotées de propriétés conductrices permettant leur utilisation comme matériau d'électrode, en particulier d'électrode de condensateurs ceramiques multicouches. L'invention se rapporte également au procédé de préparation de ces nouvelles perovskites.

La demande de brevet EP-A-0 184 951 décrit des perovskites oxyazotées de formule $ABO_{3-n}N_n$ dans le réseau cationique desquelles les cations métalliques A et B sont présents à leur degré d'oxydation maximum normal. De telles perovskites présentent des propriétés diélectriques.

La présente invention concerne des perovskites oxyazotées répondant à la formule générale I :

$$A\ B\ (O,N)_3 \quad (I)$$

dans le réseau cationique de laquelle :

* **A** désigne un métal choisi parmi les métaux des groupes IA et IIA, l'yttrium et les lanthanides,
* **B** désigne un métal choisi parmi les métaux de transition des groupes IVA à IB,
* à la condition expresse que l'un au moins des métaux **A** et **B** soit présent à un degré d'oxydation différent de son degré d'oxydation maximum normal.

L'invention vise plus particulièrement les perovskites de formule générale I dans laquelle **A** est choisi parmi le groupe comprenant Ca, Sr, Ba, La, Pr, Nd, Sm, Eu et Ce et **B** est choisi parmi le groupe comprenant W, Mo, V, Nb, Ta et Ti.

Dans le réseau cationique des perovskites selon l'invention, généralement le métal B sera présent à un degré d'oxydation inférieur à son degré d'oxydation maximum normal, c'est-à-dire que l'on observera par exemple la présence de $Ti^{III}$, $V^{IV}$ ou $V^{III}$, $Mo^V$ et $W^V$. Toutefois, dans certains cas particuliers, le métal B sera présent à un degré d'oxydation supérieur à son degré d'oxydation maximum normal. Ainsi, on observera par exemple la présence de $Cu^{III}$ ou encore de $Fe^{IV}$. Dans le cas du cuivre, on se trouvera donc en présence d'une délocalisation des électrons ou d'une valence mixte caractérisée par la présence simultanée de $Cu^{II}$ et $Cu^{III}$.

Selon une autre caractéristique de l'invention, les perovskites oxyazotées sont caractérisées en ce que l'un au moins des métaux A et B est présent à l'état de valence mixte.

La présence, dans le site cationique, de certains éléments tels que le cuivre qui a une préférence pour une coordinence plus basse et tend vers la coordinence carrée plan, donne naissance dans les perovskites de l'invention à des sites anioniques vacants pouvant atteindre jusqu'à environ 20% des éléments anioniques.

Selon une autre caractéristique de l'invention, les perovskites peuvent également présenter une lacune cationique sur le métal A. C'est ainsi que par exemple dans le cas où le métal A est du lanthane, il existe des défauts de stoechiométrie sur le site A, qui conduisent à une valence mixte sur le site B associé, par exemple la présence de vanadium aux valences III et IV.

Toutes ces anomalies stoechiométriques, sites anioniques ou cationiques vacants se traduisent par une valence mixte de l'un des éléments du réseau cationique, c'est-à-dire par une délocalisation électronique qui est précisément responsable des propriétés conductrices des perovskites de l'invention. Ces propriétés électriques, en fonction de la nature exacte des perovskites selon l'invention, correspondent à un état semi-conducteur de type n ou p, semi-métallique ou encore métallique. Dans tous les cas, ces propriétés peuvent être mises à profit en utilisant les perovskites conductrices selon l'invention comme matériau d'électrode, notamment d'électrode de condensateur. L'application préférentielle de ces perovskites conductrices de formule générale I concerne les condensateurs à structure céramique multicouche obtenus par cofrittage de perovskites conductrices selon l'invention avec des perovskites diélectriques telles que décrites dans la demande de brevet EP-A-0 184 951.

Enfin, la présente invention se rapporte au procédé de préparation des perovskites conductrices de formule générale I. Ce procédé consiste à soumettre un oxyde mixte des métaux A et B à une nitruration sous courant d'ammoniac à une température comprise entre 700°C et 900°C. En particulier, l'oxyde sera choisi parmi les tungstates tels que $CaWO_4$, $SrWO_4$, $BaWO_4$, et $Ln_2W_2O_9$, les molybdates tels que $SrMoO_4$ et les vanadates tels que $LaVO_4$ et $LaVO_3$.

A titre d'illustration, on mentionnera ci-après quelques exemples particuliers de perovskites oxyazotées répondant à la formule générale I précitées. Toutes ces perovskites présentent une remarquable conductivité électrique.

D'autres caractéristiques et avantages de la présente invention apparaîtront à la lecture de la description détaillée faite ci-après en référence à différents exemples particuliers de préparation et de caractérisation de perovskites conductrices, donnés à titre d'illustration.

Exemples 1 à 4

**Couples Ca(Sr,Ba)-W et Sr-Mo**

On utilise comme produits de départ les oxydes doubles à structure scheelite du type $CaWO_4$. Les tungstates ou molybdates d'alcalino-terreux ou de lanthanides sont préparés en tenant compte de la sublimation des oxydes de tungstène ou de molybdène à haute température.

Lorsque la réaction entre ces oxydes et l'oxyde alcalino-terreux provenant de la décomposition thermique du carbonate, a lieu à une température telle qu'on peut négliger les pertes d'oxyde de tungstène ou de molybdène par sublimation, on effectue celle-ci en une seule étape. Ainsi, par exemple, la préparation des phases scheelites $Ca(Sr,Ba)WO_4$ s'effectue par chauffage au four à moufle, dans un creuset d'alumine, de quantités stoechiométriques de carbonate de calcium et d'oxyde $WO_3$. La température est fixée à 750°C pendant une durée de 72 heures.

Par contre, l'obtention de composés de formule $Ln_2W_2O_9$ ou $Ln_2WO_6$ nécessite des températures nettement supérieures. On opère alors en deux étapes successives.

La première étape consiste à précombiner l'oxyde $WO_3$ dans le mixte $Ln_2O_3$-$xWO_3$ ($x = 2$ ou $1$) par chauffage au four à moufle à la température de 880°C durant 14 heures. Après refroidissement, le produit obtenu est soigneusement broyé dans un mortier d'agate, puis chauffé à nouveau à des températures comprises entre 1100 et 1200°C selon le lanthanide utilisé. La durée du chauffage est fixée à 72 heures.

Dans tous les cas, la pureté des produits de réaction est contrôlée par analyse radiocristallographique.

La nitruration, sous courant d'ammoniac, s'effectue à des températures comprises entre 700 et 900°C pendant une durée d'environ 14 heures.

Le débit d'ammoniac est d'autant plus grand que la température est plus élevée, de façon à prévenir au maximum la dissociation en azote et hydrogène avant contact avec le produit. Schématiquement, la réaction globale peut s'écrire :

$$ABO_x + NH_3 \rightarrow ABO_yN_z + H_2O\uparrow$$

Il est clair que la réaction n'est pas totale. Une partie de l'ammoniac est dissociée et l'azote et l'hydrogène provenant de cette dissociation entraînent la vapeur d'eau issue de la réaction.

Lors du refroidissement, afin d'éviter toute hydrolyse, on substitue au courant d'ammoniac un balayage par de l'azote-qualité U.

La substitution azote-oxygène de la réaction de formation précédente se traduit par une perte de masse qui est vérifiée par pesée des produits avant et après réaction.

Les diverses expériences effectuées en faisant varier en particulier la température montrent qu'on obtient, après réaction, une composition de la phase pure qui reste toujours sensiblement identique.

Ainsi, le dosage de l'azote dans le cas des composés Ca-W-O-N varie entre 7,5 et 7,7% sur des échantillons provenant de 13 préparations différentes. On a vérifié sur une même préparation la reproductibilité du dosage. Ces valeurs expérimentales ne sont pas significativement différentes pour qu'on puisse conclure à l'existence d'un domaine monophasé très étendu, dans nos conditions opératoires.

Le taux maximum d'azote obtenu ($7,7_4$%) correspond à la formulation :

$$CaWO_{1,5_1}N_{1,4_9}$$

très proche de $CaWO_{1,5}N_{1,5}$ pour laquelle le calcul donne un taux d'azote de 7,81%. L'écart, en valeur absolue, de 1% entre cette valeur et la valeur expérimentale est du même ordre de grandeur que la précision du dosage.

Dans cet exemple, le tungstène a un degré d'oxydation moyen très proche de 5,5 et la phase peut s'écrire de façon formelle:

$$CaW^{VI}_{1-x}W^{V}_{x}O_{1+x}N_{2-x}$$

avec ici : $x_{exp} = 0,5_1$.

En ce qui concerne le couple Sr-W, le dosage de l'azote (% $N = 4,8$%) conduit à la formule $SrWO_{1,9}N_{1,1}$ dans laquelle le degré d'oxydation du tungstène est très proche de V. La valeur de x, en utilisant la même formulation que précédemment est égale à 0,9.

De façon analogue la phase perovskite correspondante Ba-W a été identifiée par analyse radiocristallographique dans le mixte réactionnel.

Dans le cas du couple Sr-Mo, les dosages de l'azote donnent des taux compris entre 6,5 et 7,2% et conduisent à la formule :

$$SrMo_{1-x}^{VI}Mo_x^V O_{1+x}N_{2-x}$$

avec : $0,8_3 <; x <; 0,9_5$

soit une formule moyenne $SrMoO_{1,9}N_{1,1}$

Tous ces composés ont été caractérisés par analyse radiocristallographique aux rayons X.

Dans tous les cas la maille apparaît comme cubique et le tableau I ci-après donne le dépouillement des diagrammes de poudre.

Le calcul des paramètres, affinés par une méthode de moindres carrés, donne les valeurs suivantes :

$CaWO_{1,5}N_{1,5}$    $a = 3,924$ (1) Å

$SrWO_{1,9}N_{1,1}$    $a = 3,989$ (3) Å

$BaWO_{1+x}N_{2-x}$    $a = 4,117$ (3) Å

$SrMoO_{1,9}N_{1,1}$    $a = 4,005$ (3) Å

Ces composés présentent à l'état pulvérulent un caractère hygroscopique marqué. La vitesse de cette dégradation est la plus rapide dans le cas de $SrWO_{1,9}N_{1,1}$. On observe un dégagement d'ammoniac et on obtient par un processus d'oxydation l'oxyde initial.

<p>TABLEAU 1</p>

Diagrammes de poudre des oxynitrures $A^{II}W(O,N)_3$ ($A^{II}$ = Ca, Sr, Ba) et $SrMoO_{1,9}N_{1,1}$.

| $CaWO_{1,5}N_{1,5}$ | | | $SrWO_{1,9}N_{1,1}$ | | | $BaWO_{1+x}N_{2-x}$ | | | $SrMoO_{1,9}N_{1,1}$ | | |
|---|---|---|---|---|---|---|---|---|---|---|---|
| $d_{hkl}$ | hkl | $I/I_o$ | $d_{hkl}$ | hkl | $I/I_o$ | $d_{hkl}$ | hkl | $I/I_o$ | $d_{hkl}$ | hkl | $I/I_o$ |
| 3,926 | 100 | 60 | 3,978 | 100 | mF | 4,114 | 100 | <1 | 4,012 | 100 | 5 |
| 2,776 | 110 | 100 | 2,818 | 110 | TF | 2,917 | 110 | 100 | 2,830 | 110 | 100 |
| 2,265 | 111 | 10 | | | | | | | 2,315 | 111 | <1 |
| 1,961 | 200 | 30 | 1,983 | 200 | mF | 2,058 | 200 | 30 | 2,016 | 200 | 30 |
| 1,756 | 210 | 25 | 1,783 | 210 | f | | | | | | |
| 1,603 | 211 | 45 | 1,622 | 211 | F | 1,684 | 211 | 40 | 1,634 | 211 | 30 |
| 1,387 | 220 | 15 | 1,401 | 220 | mF | 1,453 | 220 | 50 | 1,415 | 220 | 15 |
| 1,308 | 300 | 10 | 1,332 | 300 | f | 1,370 | 300 | 25 | | | |
| 1,241 | 310 | 20 | 1,263 | 310 | mF | 1,244 | 311 | 15 | 1,266 | 310 | 10 |

Exemples 5 à 8

**Couples Ln-W(Ln = La,Pr,Nd,Eu)**

En considérant, par rapport au titanate de baryum $BaTiO_3$, la double substitution cationique $Ti^{IV}$-$W^{VI}$ et $Ba^{II}$-$Ln^{III}$, on pouvait espérer, a priori, obtenir une perovskite totalement azotée de stoechiométrie $ABN_3$.

On obtient effectivement des perovskites lorsque le lanthanide va du lanthane au néodyme, mais du fait que le tungstène ne conserve pas son état d'oxydation maximal, celles-ci sont partiellement oxygénées.

Dans le cas du néodyme, on observe également la formation d'une phase scheelite de formule $NdW^{VI}O_3N$.

Le cas de l'europium, du fait de la stabilité du degré d'oxydation II, est particulier et on obtient avec cet élément une phase perovskite au lieu de la scheelite normalement attendue.

La préparation de ces composés s'effectue par nitruration sous courant d'ammoniac des tungstates $Ln_2W_2O_9$ préparés comme indiqué précédemment. Les températures de réaction sont comprises entre 700 et 900°C.

On obtient la phase perovskite pure lorsque Ln = La ou Pr.

Dans le cas du néodyme, si on opère près du seuil thermique de la réaction (environ 700°C), on obtient majoritairement la phase scheelite. La proportion de cette phase diminue si on prolonge le chauffage ou si on opère à température plus élevée.

La composition de ces phases a été déterminée par dosage chimique de l'azote. Pour le couple La-W, le taux expérimental est compris entre 8,4 et 9,2%. Il en résulte pour la formule :

$$LaW^{VI}_{1-x}W^{V}_xO_xN_{3-x}$$

une valeur de x comprise entre 0,8 et 0,6.

Il en est de même dans le cas du néodyme pour lequel le taux d'azote est compris entre 8,2 et 9,2% $(0,8 > ; x > ; 0,6)$.

Enfin, les résultats de l'analyse pour un composé du praséodyme donnent une valeur de $x = 0,75$ (taux d'azote expérimental: 8,5%), d'où la formule

$$PrWO_{0,75}N_{2,25}.$$

Pour un lanthanide donné, on n'observe pas à l'analyse radiocristallographique aux rayons X de déplacement des raies de diffraction pour ces diverses compositions.

Alors que la cinétique de formation de la phase perovskite devient de plus en plus lente lorsque le rayon du lanthanide diminue, on obtient facilement celle-ci avec l'europium, ce qui, en soi, prouve la présence d'europium bivalent de rayon ionique plus élevé qu'à la valence III dans le composé.

Les résultats expérimentaux sont les suivants :

| Température de préparation | Taux expérimental d'azote (% pondéral) | Formule |
|---|---|---|
| 740°C | 6,40 | $EuWO_{1,25}N_{1,75}$ |
| 860°C | 7,35 | $EuWO_{1,0}N_{2,0}$ |

Il s'agit ici de composés présentant des éléments à valence mixte dans les deux sites A et B de la perovskite.

Le tableau II rassemble les distances interréticulaires correspondant aux plans h k l pour les différents composés.

Ces diagrammes s'indexent dans une maille cubique dont les paramètres, affinés par une méthode de moindres carrés, sont indiqués ci-après :

$$LaWO_{0,6}N_{2,4} \qquad a = 3,994 \ (1) \ \overset{\circ}{A}$$

$$PrWO_{0,7_5}N_{2,2_5} \qquad a = 3,967 \ (1) \ \overset{\circ}{A}$$

$$NdWO_{0,7}N_{2,3} \qquad a = 3,964 \ (1) \ \overset{\circ}{A}$$

$$EuWO_1N_2 \qquad a = 3,974 \ (1) \ \overset{\circ}{A}$$

Contrairement aux perovskites précédentes qui faisaient intervenir un alcalino-terreux, les phases équivalentes avec un lanthanide ne présentent aucun caractère hygroscopique.

L'action de l'oxygène a été étudiée par analyse thermogravimétrique dans le cas du composé au lanthane. La réaction débute à 300°C et conduit au tungstate $La_2W_2O_9$.

## TABLEAU II

Diagrammes de poudre des oxynitrures $LnW(O,N)_3$ - $Ln = La, Pr, Nd, Eu.$

| $LaWO_{0,7}N_{2,3}$ | | | $PrWO_{0,75}N_{2,25}$ | | | $NdWO_{0,7}N_{2,3}$ | | | $EuWON_2$ | | |
|---|---|---|---|---|---|---|---|---|---|---|---|
| $d_{hkl}$ | hkl | $I/I_o$ | $d_{hkl}$ | hkl | $I/I_o$ | $d_{hkl}$ | hkl | $I/I_o$ | $d_{hkl}$ | hkl | $I/I_o$ |
| 3,995 | 100 | 5 | 3,969 | 100 | 5 | 3,960 | 100 | 5 | 3,978 | 100 | 5 |
| 2,821 | 110 | 100 | 2,805 | 110 | 100 | 2,805 | 110 | 100 | 2,814 | 110 | 100 |
| 1,998 | 200 | 25 | 1,981 | 200 | 25 | 1,981 | 200 | 25 | 1,987 | 200 | 25 |
| 1,787 | 210 | <1 | 1,774 | 210 | 2 | 1,774 | 210 | 3 | 1,778 | 210 | 3 |
| 1,631 | 211 | 35 | 1,618 | 211 | 30 | 1,618 | 211 | 40 | 1,623 | 211 | 35 |
| 1,412 | 220 | 15 | 1,402 | 220 | 15 | 1,400 | 220 | 15 | 1,404 | 220 | 15 |
| 1,262 | 310 | 15 | 1,255 | 310 | 15 | 1,254 | 310 | 15 | 1,256 | 310 | 15 |

### Exemple 9

**Couple La-V**

Dans ce système, contrairement aux précédents, il existe un composé oxygéné de formule $LaVO_3$ de structure perovskite. Ce n'est pas une structure idéale : elle présente une déformation orthorhombique identique à celle qu'on observe dans $GdFeO_3$. Dans le cas présent, la maille apparaît comme quadratique.

Ce composé admet des défauts à la stoechiométrie sur le site A. Il en résulte un domaine de composition monophasé formulé $La_{2/3+y} \square_{1/3-y} VO_3$ dans lequel le vanadium possède les valences III et IV. Ainsi à la valeur de y égale à 0,23 correspond la formule globale $La_{0,9}VO_3$. La formule électronique développée peut s'écrire :

$$La_{0,9} \square_{0,1} V^{III}_{0,7} V^{IV}_{0,3} O_3$$

La substitution d'une partie de l'oxygène par de l'azote est un autre moyen d'augmenter la charge formelle du vanadium tout en gardant le rapport La/V égal à 1.

La préparation de $LaVO_3$ peut s'effectuer par réduction du vanadate $LaVO_4$, sous courant d'hydrogène, dans l'intervalle de température 700-800°C.

L'utilisation d'ammoniac permet d'avoir une atmosphère à la fois nitrurante et réductrice. La réaction globale peut alors s'écrire :

$$LaVO_4 + \frac{2 + 2x}{3} NH_3 \rightarrow LaV^{III}_{1-x} V^{IV}_x O_{3-x} N_x + (1 + x) H_2O + \frac{2-x}{6} N_2$$

On a effectué différentes expériences à des températures comprises entre 650 et 800°C. Dans tous les cas, la cinétique de la réaction est lente et il y a évolution de la composition finale, même après un chauffage qui peut excéder plusieurs jours.

Il existe un large domaine de composition qui s'étend de

$$LaV^{III} O_3 \quad \text{à} \quad LaV^{III}_{0,1} V^{IV}_{0,9} O_{2,1} N_{0,9}.$$

Cette dernière phase a été obtenue après deux chauffages d'une semaine, entrecoupés par un broyage. Des manipulations pendant des temps moins longs conduisent à des compositions intermédiaires. Des essais de longue durée permettent d'obtenir la composition la plus riche en azote du domaine, c'est-à-dire $LaV^{IV}O_2N$ qui présente d'excellentes propriétés électro-conductrices.

Dans tous les cas précédents, la composition est déterminée par dosage chimique de l'azote. Ce dosage nécessite une attaque du produit par de la potasse fondue. On a remarqué que cette attaque était plus difficile dans le cas des phases du couple La-V qu'avec les autres perovskites azotées.

L'oxydation a été étudiée par thermogravimétrie sous oxygène. Elle débute à 250°C et conduit à $LaVO_4$.

L'analyse radiocristallographique par rayons X des différentes phases dans le domaine de composition révèle une évolution de la maille cristalline.

Le diagramme de $LaVO_3$ présente, outre les raies caractéristiques de la perovskite, des raies d'intensité faible dues à la symétrie de la maille pseudoquadratique qui dérive de la maille cubique selon :

$a_{quad.} = a_{cub.}\sqrt{2}$ $\quad c_{quad.} = 2 a_{cub.}$

Lorsque le taux d'azote augmente, on observe une disparition progressive de ces raies de faible intensité et la maille semble apparaître comme cubique. Il faut toutefois noter une dissymétrie marquée du profil de certaines raies qui indique que la symétrie réelle n'est pas cubique, mais la précision des diagrammes de diffraction aux rayons X ne permet pas de proposer sans ambiguïté la symétrie de la maille.

Le tableau III rassemble les raies observées des diagrammes de diffraction de $LaVO_3$ et $LaVO_{2,1}N_{0,9}$.

## TABLEAU III

Diagramme de poudre de l'oxynitrure $LaVO_{2,1}N_{0,9}$ comparé à celui de l'oxyde $LaVO_3$.

| LaVO$_3$ | | | LaVO$_{2,1}$N$_{0,9}$ | | |
|---|---|---|---|---|---|
| $d_{hkl}$ | hkl | $I/I_o$ | $d_{hkl}$ | hkl | $I/I_o$ |
| 3,926 | 110 | 20 | 3,909 | 100 | 20 |
| 3,496 | 111 | 5 | | | |
| 2,772 | 200 | 100 | 2,759 | 110 | 100 |
| 2,614 | 201 | 5 | | | |
| 2,362 | 211 | 5 | | | |
| 2,265 | 202 | 20 | 2,257 | 111 | 20 |
| 2,171 | 113 | 5 | | | |
| 1,961 | 220 | 30 | 1,951 | 200 | 30 |
| 1,903 | 221 | 5 | | | |
| 1,754 | 310 | 10 | 1,743 | 210 | 10 |
| 1,713 | 311 | 5 | | | |
| 1,601 | 312 | 45 | 1,593 | 211 | 40 |
| 1,457 | 313 | 5 | | | |
| 1,388 | 400 | 15 | 1,376 | 220 | 15 |
| 1,365 | 401 | 5 | | | |
| 1,308 | 330 | 10 | 1,302 | 300 | 5 |

Les paramètres de maille de phases présentant différentes compositions ont été affinés à partir des distances interréticulaires expérimentales. Les résultats sont indiqués dans le tableau IV.

## TABLEAU IV

| Composition | $a_{cub.}$ (Å) | $a_{quad.}$ (Å) | $c_{quad.}$ (Å) | $V$ (Å$^3$) |
|---|---|---|---|---|
| LaVO$_3$ | | 5,547 (1) | 7,847 (6) | 241,44 |
| LaVO$_{2,8}$N$_{0,2}$ | | 5,542 (1) | 7,825 (6) | 240,33 |
| LaVO$_{2,3}$N$_{0,7}$ | 3,907 (1) | | | 238,59 |
| LaVO$_{2,1}$N$_{0,9}$ | 3,899 (2) | | | 237,15 |

## ETUDE STRUCTURALE DE LaWO$_x$N$_{3-x}$(x = 0,6)

L'étude par diffraction de neutrons de l'oxynitrure LaWO$_{0,6}$N$_{2,4}$ montre que la maille cristalline n'est pas de symétrie cubique, mais quadratique avec

$a_{quad.} = a_{cub.}\sqrt{2}$

$c_{quad.} = 2a_{cub.}$

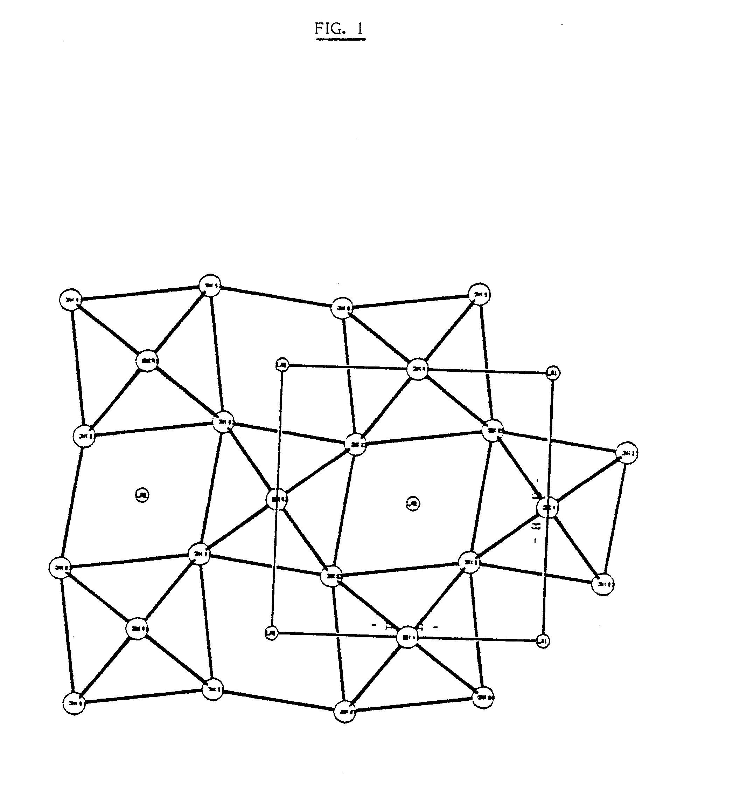

Le groupe spatial est I$\bar{4}$. Le calcul montre que les atomes d'oxygène et d'azote ne sont pas ordonnés. La figure 1 est une projection de la structure selon $\vec{c}$ sur laquelle on peut observer une déformation dans l'enchaînement des octaèdres de coordination du tungstène.

## PROPRIETES ELECTRIQUES

Les composés dont la synthèse à été décrite précédemment ont été pressés sous forme de barreaux parallélépipédiques 0,1 x 0,3 x 1,2 cm, sous une pression de 5.10$^3$ kg.cm$^{-2}$. Afin d'éviter une décomposition partielle des échantillons après pressage, les barreaux n'ont été soumis à aucun traitement thermique. Dans ces conditions, la compacité des barreaux est voisine de 50%.

La conductivité a été mesurée par la méthode des quatre pointes alignées décrite par J.LAPLUME "L'Onde Electrique" 335 (1955) 113. Elle a été calculée en mesurant le rapport intensité/tension entre les pointes dans les deux sens de circulation du courant pour minimiser les effets de dissymétrie, toujours possibles, entre les contacts.

Le pouvoir thermoélectrique a été mesuré de la façon suivante. Le barreau est maintenu entre deux têtes de platine. Un four permet de maintenir entre les deux têtes, donc entre les deux extrémités du barreau, une différence de température $\Delta T \simeq 10$ K. La f.é.m. créée aux bornes de l'échantillon est mesurée à l'aide d'un électromètre Keithley modèle 616. Dans ces conditions, les valeurs du pouvoir thermoélectrique sont déterminées avec une erreur de l'ordre de $\pm$ 1 $\mu$V.K$^{-1}$.

Les propriétés électriques des échantillons ont été mesurées en fonction de la température dans l'intervalle 80-400 K. Des températures supérieures à 400 K ont été rejetées dans le souci de ne pas altérer la composition des barreaux. Pour les basses températures (T < ;290 K), les mesures ont été réalisées sous une pression d'hélium de 200 mbar., et sous une même pression d'argon pour les températures supérieures à la température ambiante.

## 1/ Composés LnW(O,N)$_3$ (Ln = La, Nd)

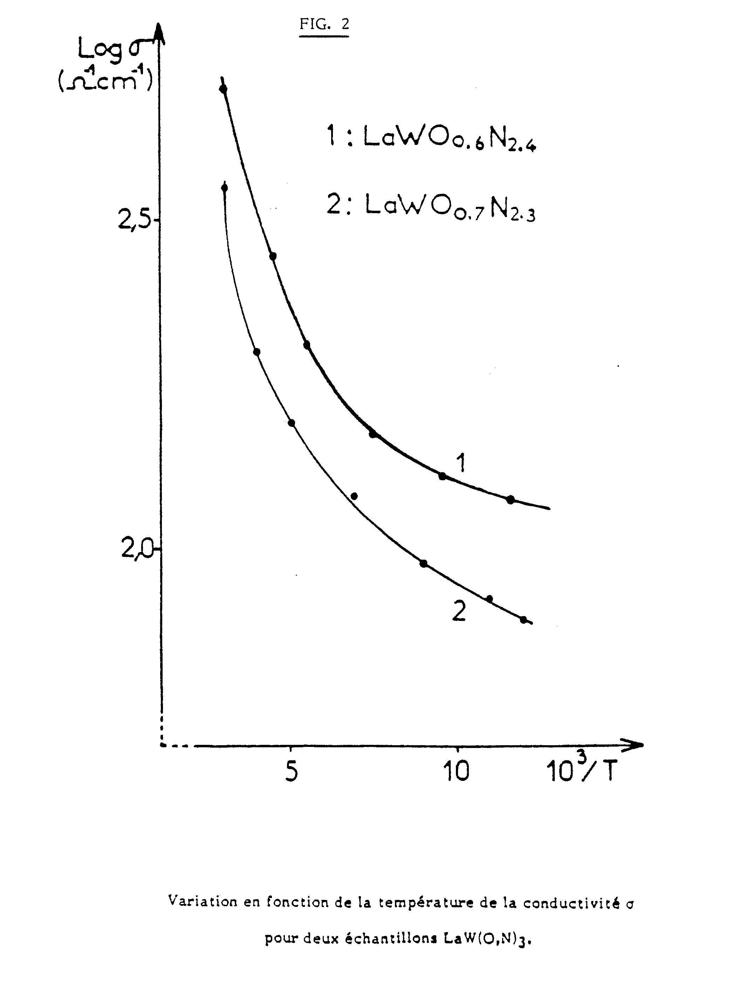

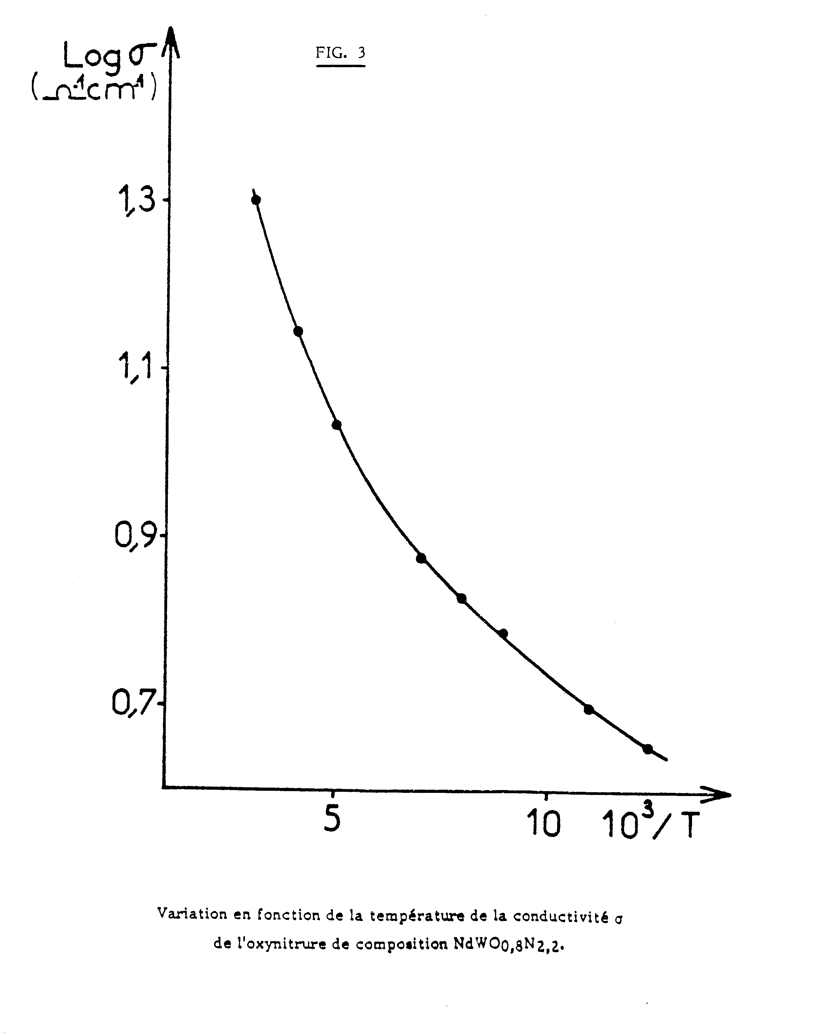

Trois échantillons ont été étudiés : LaWO$_{0,6}$N$_{2,4}$, LaW$_{0,7}$N$_{2,3}$ et NdW$_{0,8}$N$_{2,2}$. Pour ces trois échantillons, l'évolution de la conductivité en fonction de la température est représentée sur les figures 2 et 3. On peut distinguer sur chacune de ces courbes deux parties approximativement linéaires, une à basse température (T < ;170 K) et une à plus haute température (T > ;200 K). Dans chacune de ces parties la conductivité peut se mettre sous la forme classique pour les semiconducteurs $\sigma = \sigma_0 \exp.(-\Delta E/KT)$. Les énergies d'activation que l'on peut calculer à partir des résultats expérimentaux sont très faibles et pratiquement indépendantes de la composition (cf. tableau suivant). La transition entre les deux domaines de température s'effectue de façon douce.

| Composition | $\Delta E$ (eV) | |
|---|---|---|
| | $T < 170$ K | $T > 200$ K |
| $LaWO_{0,6}N_{2,4}$ | 0,002 | 0,012 |
| $LaWO_{0,7}N_{2,3}$ | 0,003 | 0,013 |
| $NdWO_{0,8}N_{2,2}$ | 0,003 | 0,015 |

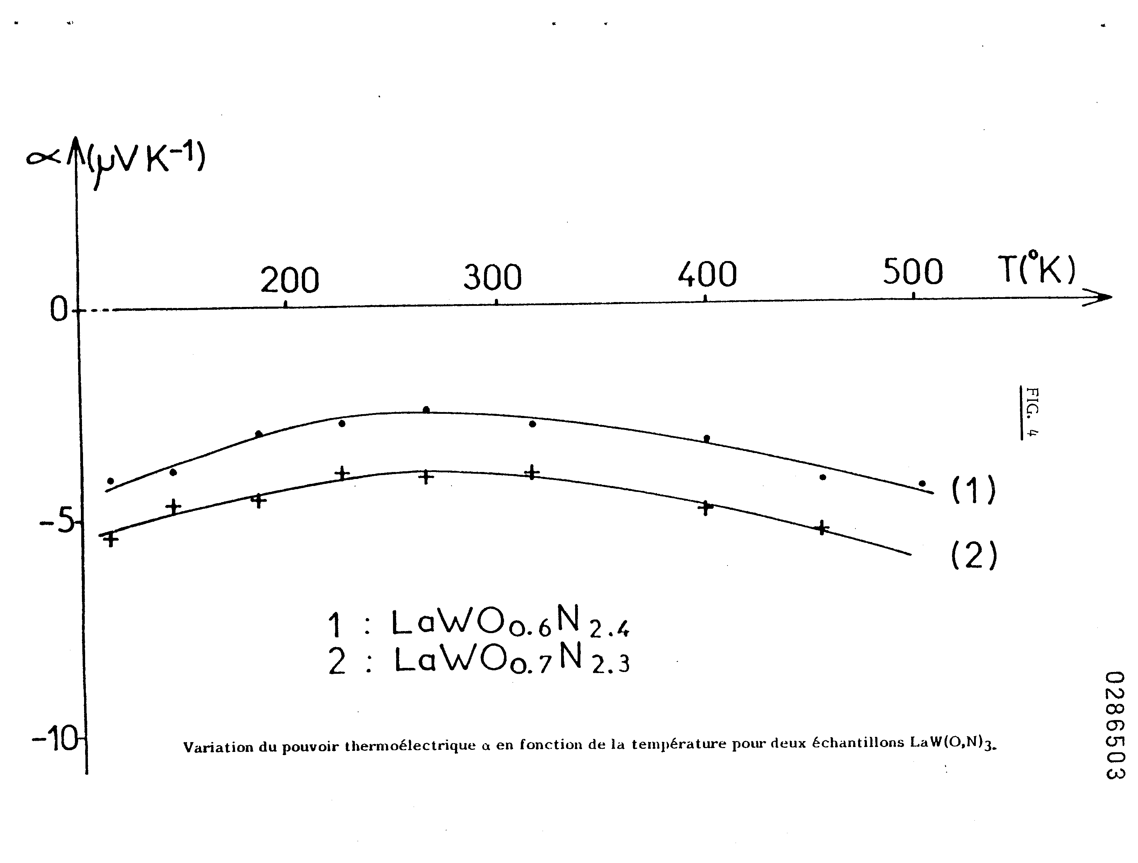

L'évolution du pouvoir thermoélectrique en fonction de la température est représentée pour les deux phases au lanthane sur la figure 4. La valeur négative de $\alpha$ indique que les porteurs de charge majoritaires sont des électrons. $\alpha$ est très faible puisqu'à la température ordinaire $|\alpha| < ;5$ $\mu V.K^{-1}$ et aux erreurs expérimentales près pratiquement indépendant de la température.

La faible valeur de $\alpha$ montre que la densité de porteurs est très importante ce qui est en accord avec le nombre de porteurs potentiels déduits du degré d'oxydation moyen du tungstène déterminé à partir des résultats analytiques et qui est compris entre 5,2 et 5,4 pour toutes les phases étudiées. La quasi indépendance de $\alpha$ avec la température montre que le nombre de porteurs ne varie pratiquement pas dans tout le domaine de température étudié. Il en résulte que dans le mécanisme de transport de ces phases, c'est la mobilité des porteurs qui est activée. En effet, la conductivité d'un échantillon s'exprime par :

$$\sigma = ne\mu$$

où

n désigne le nombre de porteurs par unité de volume,

e leur charge

$\mu$ la mobilité.

**2/ Composés $CaW(O,N)_3$, $SrMo(O,N)_3$ et $LaV(O,N)_3$**

Dans un premier temps, on a effectué des mesures exploratoires sur les composés suivants :

**2.1 $CaWO_{1,5}N_{1,5}$**

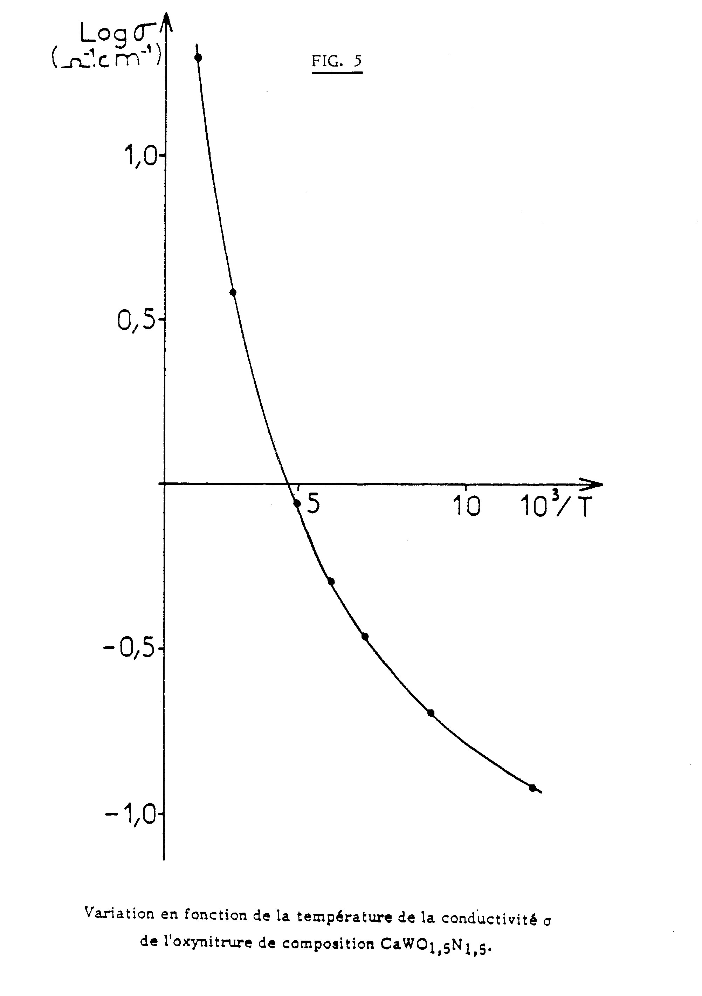

On a mesuré la conductivité en fonction de la température. La figure 5 représente la courbe Log $\sigma = f(1/T)$.

L'augmentation de la conductivité avec la température traduit un caractère semi-conducteur. La valeur de $\sigma$ est plus faible que dans les cas des couples Ln-W étudiés précédemment.

On peut calculer deux valeurs des énergies d'activation $\Delta E$ selon les intervalles de température considérés.

$85 < ;T < ;125$ K $\quad \Delta E = 0,011$ eV.

$200 < ;T < ;300$ K $\quad \Delta E = 0,033$ eV.

On peut relier ces résultats à la valeur du degré d'oxydation formel du tungstène qui est ici égal à 5,5, valeur supérieure à la valeur moyenne 5,3 trouvée dans les composés $LnW(O,N)_3$.

**2.2 $SrMoO_{1,9}N_{1,1}$**

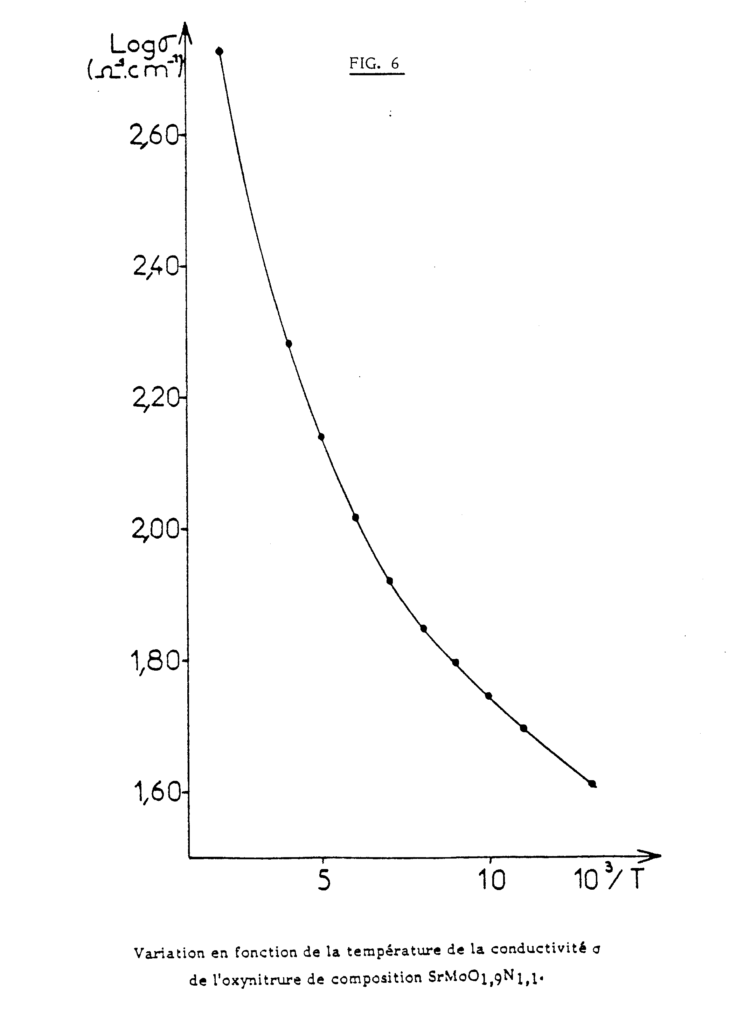

La courbe de la figure 6 représentant Log $\sigma = f(1/T)$ montre que ce composé est semi-conducteur.

Les valeurs de conductivité et des énergies d'activation sont du même ordre de grandeur qu'avec les systèmes Ln-W :

$85 < ;T < ;125$ K $\quad \Delta E = 0,004$ eV

$200 < ;T < ;300$ K $\quad \Delta E = 0,016$ eV

Dans ce composé, le degré d'oxydation formel du molybdène est égal à 5,1.

**2.3 $LaV(O,N)_3$**

Comme indiqué précédemment, on a mis en évidence un grand domaine de composition, compris entre $LaVO_3$ et $LaVO_2N$ pour lequel le degré d'oxydation du vanadium varie donc entre III et IV.

Des mesures ont été effectuées sur une perovskite ayant la composition $LaVO_{2,7}N_{0,3}$.

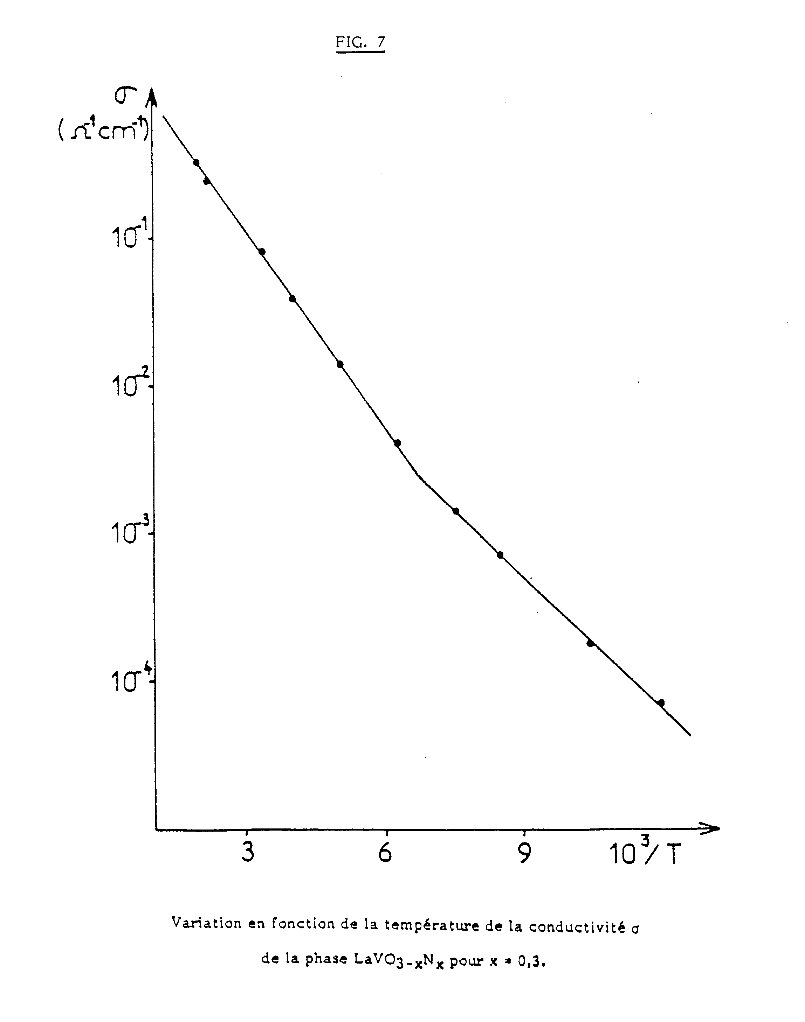

La courbe de la figure 7 qui donne la variation de σ en fonction de 1/T, montre un comportement semi-conducteur. Il existe un changement de pente à 150 K environ ; ce phénomène a été signalé pour LaVO₃ (137 K) et est attribué à une transition antiferromagnétique. Les énergies d'activation correspondantes sont :

$\Delta E = 0,06$ pour $T <$ ;150 K

$\Delta E = 0,08$ pour $T >$ ;150 K

La conductivité σ est égale à $0,1 \Omega^{-1}.cm^{-1}$ à 300 K. Toutes ces valeurs sont comparables à celles qui ont été déterminées pour $LaVO_3$.

On a étudié l'évolution du pouvoir thermoélectrique α en fonction de la température. Contrairement à ce qui a été observé précédemment dans le cas des perovskites $LnW(O,N)_3$, on observe ici une valeur positive de α indiquant qu'il s'agit d'une semi-conduction de type p.

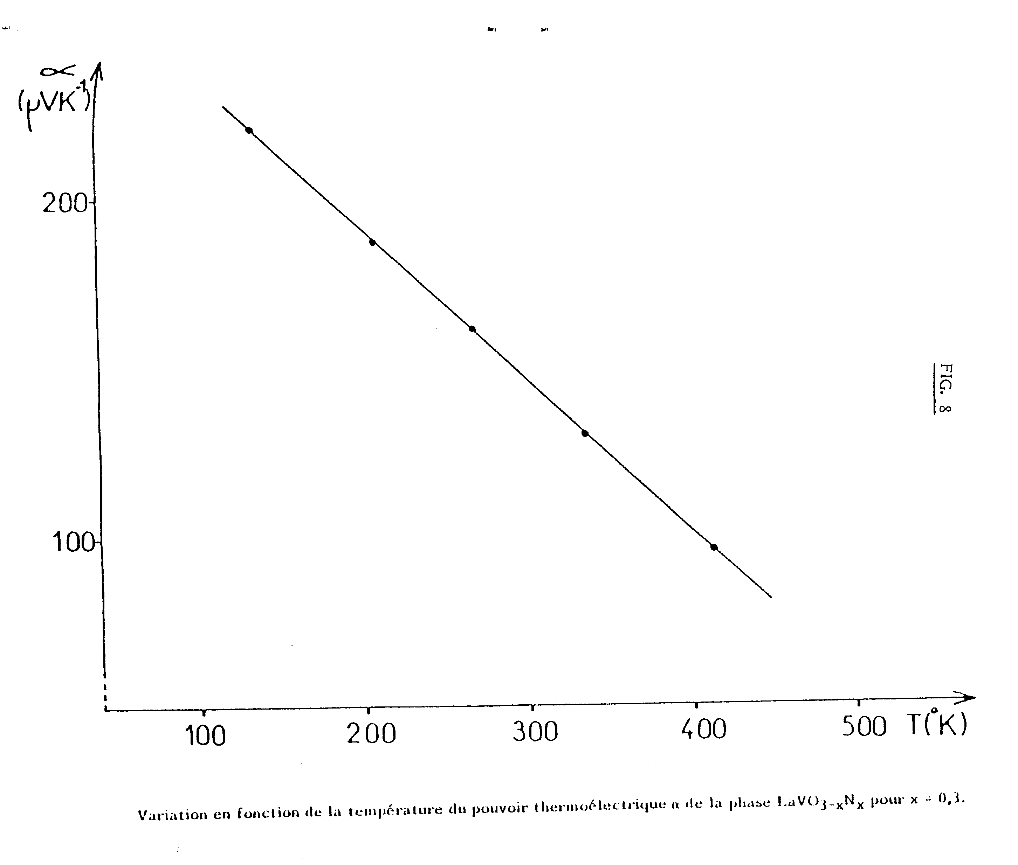

La courbe $\alpha = f(T)$ de la figure 8 montre la décroissance du coefficient de Seebeck lorsque la température augmente, ce qui traduit une augmentation dans le même temps du nombre des porteurs de charge. On peut noter par ailleurs que l'évolution est linéaire.

Les valeurs de α à 250 et 500 K sont les suivantes :

| T (K) | $\alpha$ ($\mu V \; K^{-1}$) |
|---|---|
| 250 | 270 |
| 500 | 75 |

En raison de leurs propriétés électroconductrices, les perovskites selon l'invention trouvent leur application comme matériau d'électrode, notamment de condensateurs. Les perovskites de l'invention peuvent ainsi être avantageusement cofrittées, avec un autre matériau diélectrique pour fabriquer des condensateurs céramiques. Le diélectrique associé peut lui-même être constitué par une perovskite oxyazotée du type de celles décrites dans la demande de brevet EP-A-0 184 951. Un tel cofrittage est réalisé sous une atmosphère non-oxydante, avantageusement sous atmosphère d'azote, et éventuellement en présence d'additifs de frittage tel que des composés à base de lithium. On obtient ainsi des condensateurs céramiques multicouches dans d'excellentes conditions, principalement en raison de la très grande compatibilité des deux types de perovskites en présence. En effet, d'une part les oxynitrures conducteurs sont stables dans les mêmes conditions d'atmosphère que les perovskites diélectriques, et d'autre part les mailles cristallographiques, dans l'un et l'autre cas, sont de dimension très voisine.

Les propriétés électriques des perovskites selon l'invention permettent également d'envisager leur utilisation comme capteur sélectif. L'utilisation d'oxydes semi-conducteurs comme catalyseurs de réactions d'oxydo-réduction est connue de longue date. Leur activité est généralement liée à la présence dans les matériaux d'éléments métalliques à deux degrés d'oxydation. Cette propriété a déjà été utilisée pour la réalisation de capteurs de gaz réducteurs à base d'oxydes binaires non stoechiométriques tels que $TiO_2$, $Fe_2O_3$, $SnO_2$. Ces travaux ont ensuite été étendus à des oxydes ternaires de structure perovskite ou dérivée tels que $LaMnO_3$ ou $LaCoO_3$ dont l'activité catalytique est également bien connue.

Etant donné que la sensibilité des matériaux est en principe liée aux propriétés d'adsorption du gaz sur l'oxyde, on utilise en général des couches épaisses sérigraphiées et on suit la variation de la résistance électrique du matériau en fonction de la pression partielle de gaz, les capteurs devant par ailleurs présenter une réponse aussi rapide que possible à la détection du gaz.

Dans le cas des perovskites oxyazotées à valence mixte selon l'invention de formule $AB(O,N)_3$, le degré d'oxydation de l'élément B, voire de l'ensemble A + B ($EuW(O,N)_3$ par exemple) est directement lié à la proportion azote/oxygène dans le composé.

Pour cette application, il a été montré que la sensibilité du capteur est plus grande si la conductibilité n'est pas très élevée. On choisira donc préférentiellement dans ce cas des phases moins conductrices.

## Revendications

1/ Perovskites oxyazotées conductrices répondant à la formule générale I

$A B (O,N)_3$    (I)

dans le réseau cationique de laquelle :

* **A** désigne un métal choisi parmi les métaux des groupes IA et IIA, l'yttrium et les lanthanides,

* **B** désigne un métal choisi parmi les métaux de transition des groupes IVA à IB,

**0 286 503**

* à la condition expresse que l'un au moins des métaux **A** et **B** soit présent à un degré d'oxydation différent de son degré d'oxydation maximum normal.

2/ Perovskites oxyazotées selon la revendication 1, caractérisées en ce que l'un au moins des métaux **A** et **B** est présent à l'état de valence mixte.

3/ Perovskites oxyazotées selon la revendication 1 ou 2, caractérisées en ce qu'au moins une partie du site anionique est vacante.

4/ Perovskites oxyazotées selon la revendication 1 ou 2, caractérisées en ce qu'elles comportent au moins une lacune cationique sur le métal **A**.

5/ Perovskites oxyazotées selon l'une des revendications 1 à 4, caractérisées en ce que le métal **A** est choisi parmi le groupe comprenant Ca, Sr, Ba, La, Pr, Nd, Sm, Eu et Ce.

6/ Perovskites oxyazotées selon l'une des revendications 1 à 5, caractérisées en ce que le métal **B** est choisi parmi le groupe comprenant W, Mo, V, Nb, Ta et Ti.

7/ Perovskites oxyazotées selon l'une des revendications 1 à 6, caractérisées en ce qu'elles sont choisies parmi :

$$La \ \overset{III}{V}_{1-x} \ \overset{IV}{V}_{x} \ O_{3-x} \ N_{x} \qquad avec \quad 0 < x \leqslant 1$$

$$Ca \ \overset{VI}{W}_{1-x} \ \overset{V}{W}_{x} \ O_{1+x} \ N_{2-x} \qquad avec \quad 0,4 \leqslant x \leqslant 0,6$$

$$Sr \ \overset{VI}{W}_{1-x} \ \overset{V}{W}_{x} \ O_{1+x} \ N_{2-x} \qquad avec \quad 0,8 \leqslant x \leqslant 1$$

$$Ba \ \overset{VI}{W}_{1-x} \ \overset{V}{W}_{x} \ O_{1+x} \ N_{2-x} \qquad avec \quad 0,8 \leqslant x \leqslant 1$$

$$Sr \ \overset{VI}{Mo}_{1-x} \ \overset{V}{Mo}_{x} \ O_{1+x} \ N_{2-x} \qquad avec \quad 0,8 \leqslant x \leqslant 1$$

$$La \ \overset{VI}{W}_{1-x} \ \overset{V}{W}_{x} \ O_{x} \ N_{3-x} \qquad avec \quad 0,6 \leqslant x \leqslant 0,8$$

$$Pr \ \overset{VI}{W}_{1-x} \ \overset{V}{W}_{x} \ O_{x} \ N_{3-x} \qquad avec \quad 0,6 \leqslant x \leqslant 0,8$$

$$Nd \ \overset{VI}{W}_{1-x} \ \overset{V}{W}_{x} \ O_{x} \ N_{3-x} \qquad avec \quad 0,6 \leqslant x \leqslant 0,8$$

$$\overset{III}{Eu}_{1-y} \ \overset{II}{Eu}_{y} \ \overset{VI}{W}_{1-x} \ \overset{V}{W}_{x} \ O_{x+y} \ N_{3-(x+y)} \qquad avec \ 0,5 \leqslant x+y \leqslant 1,5$$

8/ Procédé de préparation de perovskites oxyazotées selon l'une des revendications 1 à 7, caractérisé en ce que l'on soumet un oxyde mixte des métaux **A** et **B** à une nitruration sous courant d'ammoniac à une température comprise entre 700°C et 900°C.

9/ Procédé selon la revendication 8, caractérisé en ce que ledit oxyde est choisi parmi les tungstates tels que $CaWO_4$, $SrWO_4$, $BaWO_4$ et $Ln_2W_2O_9$, les molybdates tels que $SrMoO_4$ et les vanadates tels que $LaVO_4$ et $LaVO_3$.

10/ Utilisation des perovskites oxyazotées selon l'une des revendications 1 à 7 comme matériau d'électrode, en particulier d'électrode de condensateur.

11/ Utilisation selon la revendication 10, caractérisée en ce que le condensateur présente une structure céramique multicouche obtenue par cofrittage de perovskites oxyazotées conductrices et de perovskites oxyazotées diélectriques.

14

0286503

FIG. 1

FIG. 2

1 : $LaWO_{0.6}N_{2.4}$

2 : $LaWO_{0.7}N_{2.3}$

Variation en fonction de la température de la conductivité $\sigma$

pour deux échantillons $LaW(O,N)_3$.

0286503

FIG. 3

Variation en fonction de la température de la conductivité $\sigma$

de l'oxynitrure de composition $NdWO_{0,8}N_{2,2}$.

$\propto (\mu V K^{-1})$

T(°K)

FIG. 4

1 : $LaWO_{0.6}N_{2.4}$
2 : $LaWO_{0.7}N_{2.3}$

(1)

(2)

Variation du pouvoir thermoélectrique α en fonction de la température pour deux échantillons LaW(O,N)$_3$.

Variation en fonction de la température de la conductivité $\sigma$
de l'oxynitrure de composition $CaWO_{1,5}N_{1,5}$.

0286503

FIG. 5

FIG. 6

Variation en fonction de la température de la conductivité $\sigma$
de l'oxynitrure de composition $SrMoO_{1,9}N_{1,1}$.

0286503

FIG. 7

Variation en fonction de la température de la conductivité $\sigma$

de la phase $LaVO_{3-x}N_x$ pour $x = 0,3$.

FIG. 8

Variation en fonction de la température du pouvoir thermoélectrique α de la phase $LaVO_{3-x}N_x$ pour x = 0,3.

0286503

Office européen
des brevets

# RAPPORT DE RECHERCHE EUROPEENNE

Numero de la demande

EP 88 40 0720

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | EP-A-0 184 951 (CENTRE NATIONAL DE LA RECHERCHE SCIENTIFIQUE) <br> * Revendications 1,5-11; page 14, lignes 6-28 * <br> --- | 1-11 | C 04 B 35/00 <br> C 04 B 35/50 <br> H 01 G 1/01 <br> H 01 G 4/30 |
| A | CHEMICAL ABSTRACTS, vol. 105, no. 10, 8 septembre 1986, page 753, résumé no. 89959b, Columbus, Ohio, US; R. MARCHAND et al.: "Preparation and characterization of new oxynitrides with a perovskite structure", & REV. INT. HAUTES TEMP. REFRACT. 1986, 23(1), 11-15 <br> --- | 1,5,6,8 | |
| A | DE-A-3 150 558 (MURATA MANUFACTURING CO., LTD) <br> * Revendication 1; page 9, lignes 12-26 * <br> ----- | 1,10,11 | |

| DOMAINES TECHNIQUES RECHERCHES (Int. Cl.4) |
|---|
| C 04 B <br> H 01 G <br> H 01 B |

Le présent rapport a été établi pour toutes les revendications

| Lieu de la recherche | Date d'achèvement de la recherche | Examinateur |
|---|---|---|
| LA HAYE | 05-07-1988 | LUETHE H. |

EPO FORM 1503 03.82 (P0402)

**CATEGORIE DES DOCUMENTS CITES**

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
......................................................................
& : membre de la même famille, document correspondant